# EUROPEAN PATENT APPLICATION

(11) **EP 4 529 176 A1**
(43) Date of publication of application: **26.03.2025**
(21) Application number: 23806770.6
(22) Date of filing: 09.05.2023
(51) Int. Cl.: H04N 21/2187

(54) **INFORMATION DISPLAY METHOD AND APPARATUS, AND DEVICE AND MEDIUM**

(30) Priority: 17.05.2022 CN 202210540626
(71) Applicant: BEIJING YOUZHUJU NETWORK TECHNOLOGY CO. LTD., Beijing 101299 (CN)
(72) Inventor: FENG, Lan, Beijing 100028 (CN); WANG, Xiao, Beijing 100028 (CN); ZHOU, Pei, Beijing 100028 (CN); WANG, Li, Beijing 100028 (CN); XIE, Zhiyao, Beijing 100028 (CN)
(74) Representative: Dentons UK and Middle East LLP
(86) International application number: PCT/CN2023/092989
(87) International publication number: WO 2023/221818

(57) **Abstract**

Embodiments of the disclosure relate to a method, an apparatus, a device, and a medium for displaying information. The method includes: in response to a reply display operation on first target comment information, obtaining reply information of the first target comment information, the first target comment information being sent by a viewer client of a live streaming room; determining question and reply information based on the first target comment information and the reply information; and displaying the question and reply information on a live streaming interface of the live streaming room. Therefore, relevant comment information and corresponding reply information on a live streaming interface are displayed, which not only improves the reply efficiency but also allows viewing users to intuitively obtain related information, while avoiding redundancy in the display of comment information caused by viewing users sending a large amount of repetitive comment information.

## Description

The present application claims priority to Chinese Patent Application No. 202210540626.6, filed on May 17, 2022, and entitled "METHOD, APPARATUS, DEVICE, AND MEDIUM FOR DISPLAYING INFORMATION", the entirety of which is incorporated herein by reference.

### FIELD

The present disclosure relates to the field of video application, and in particular, to a method, an apparatus, a device, and a medium for displaying information.

### BACKGROUND

Wit**h** the rise of short video applications, live streaming has become a major short video service mode because the streamer client and the viewer client can interact in real time.

In related arts, to improve the interactive experience between the streamer client and the viewer client during live streaming, the viewer client may send comment information in real time within a live streaming scenario, and the streamer client may reply based on the comment information, thereby better guiding the viewer client in making relevant decisions.

However, in practical applications, when there is a large number of viewer clients, the real-time comment information sent by the viewer client is numerous. Even for some hot events, viewer clients may send a large amount of repetitive comment information. Therefore, if the streamer client replies to each comment information one by one, it will not only lead to a low reply efficiency but also result in a low efficiency for the viewer client to receive reply information, thereby affecting the interactive experience.

### SUMMARY

**To** solve the above technical problem or at least partially solve the above technical problem, the present disclosure provides a method, an apparatus, a device, and a medium for displaying information, which displays relevant comment information and corresponding reply information on a live streaming interface, which not only improves the reply efficiency but also allows viewing users to intuitively obtain related information, while avoiding redundancy in the display of comment information caused by viewing users sending a large amount of repetitive comment information.

Embodiments of the present disclosure provide a method for displaying information, which comprises: in response to a reply display operation on first target comment information, obtaining reply information of the first target comment information, the first target comment information being sent by a viewer client of a live streaming room; determining question and reply information based on the first target comment information and the reply information; and displaying the question and reply information on a live streaming interface of the live streaming room.

The embodiments of the present disclosure further provide an apparatus for displaying information, which comprises: an obtaining module configured to, in response to a reply display operation on first target comment information, obtain reply information of the first target comment information, the first target comment information being sent by a viewer client of a live streaming room; a determining module configured to determine question and reply information based on the first target comment information and the reply information; and a displaying module configured to display the question and reply information on a live streaming interface of the live streaming room.

The embodiments of the present disclosure further provide an electronic device, comprising: a processor; a memory storing executable instructions by the processor; the processor being configured to read the executable instructions from the memory, and implement the executable instructions to implement the method for displaying information provided in the embodiments of the present disclosure.

The embodiments of the present disclosure further provide a computer-readable storage medium, storing a computer program, wherein the computer program is configured to implement the method for displaying information provided in the embodiments of the present disclosure.

Compared with the prior arts, the technical solution provided by the embodiments of the present disclosure has the following advantages:
according to the solution for displaying information provided by the embodiments of the present disclosure, in response to the reply display operation on the first target comment information, reply information of the first target comment information is obtained; and after determining question and reply information based on the first target comment information and the reply information, the question and reply information is displayed on the live streaming interface of the live streaming room. Therefore, relevant comment information and corresponding reply information on a live streaming interface are displayed, which not only improves the reply efficiency but also allows viewing users to intuitively obtain related information, while avoiding redundancy in the display of comment information caused by viewing users sending a large amount of repetitive comment information.

### BRIEF DESCRIPTION OF DRAWINGS

The above and other features, advantages, and aspects of various embodiments of the present disclosure will become more apparent from the following detailed description taken in combination with the accompanying drawings. Throughout the drawings, the same or similar reference numbers refer to the same or similar elements. It should be understood that the drawings are schematic, and elements and elements are not necessarily drawn to scale.
FIG. 1 is a schematic flowchart of a method for displaying information according to the embodiments of the present disclosure;
FIG. 2 is a schematic diagram of an information display scenario according to the embodiments of the present disclosure;
FIG. 3 is a schematic diagram of a further information display scenario according to the embodiments of the present disclosure;
FIG. 4 is a schematic diagram of a further information display scenario according to the embodiments of the present disclosure;
FIG. 5 is a schematic diagram of a further information display scenario according to the embodiments of the present disclosure;
FIG. 6A is a schematic diagram of a further information display scenario according to the embodiments of the present disclosure;
FIG. 6B is a schematic diagram of a further information display scenario according to the embodiments of the present disclosure;
FIG. 7 is a schematic diagram of a further information display scenario according to the embodiments of the present disclosure;
FIG. 8 is a schematic flowchart of a further method for displaying information according to the embodiments of the present disclosure;
FIG. 9 is a schematic flowchart of a further method for displaying information according to the embodiments of the present disclosure;
FIG. 10 is a schematic diagram of a further information display scenario according to the embodiments of the present disclosure;
FIG. 11 is a schematic diagram of a further information display scenario according to the embodiments of the present disclosure;
FIG. 12A is a schematic diagram of a further information display scenario according to the embodiments of the present disclosure;
FIG. 12B is a schematic diagram of a further information display scenario according to the embodiments of the present disclosure;
FIG. 13 is a schematic diagram of a further information display scenario according to the embodiments of the present disclosure;
FIG. 14 is a schematic diagram of a further information display scenario according to the embodiments of the present disclosure;
FIG. 15 is a schematic structural diagram of an apparatus for displaying information according to the embodiments of the present disclosure; and
FIG. 16 is a schematic structural diagram of an electronic device according to the embodiments the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein, and vice versa. It should be understood that the drawings and embodiments of the present disclosure are for exemplary purposes only and are not intended to limit the scope of the present disclosure.

It should be understood that the steps recited in the method embodiments of the present disclosure may be performed in different orders, and/or in parallel. Further, the method embodiments may include additional steps and/or omit to perform the illustrated steps. The scope of the present disclosure is not limited in this respect.

As used herein, the term "comprising" and deformation thereof are open-ended, i.e., "comprising but not limited to". The term "based on" is "based at least in part on". The term "one embodiment" means "at least one embodiment"; the term "a further embodiment" means "at least one further embodiment"; the term "some embodiments" means "at least some embodiments". The relevant definitions of other terms will be given below.

**It** should be noted that concept concepts such as "first" and "second" mentioned in this disclosure are merely used to distinguish different apparatuses, modules, or units, and are not intended to limit the order of functions performed by the apparatuses, modules, or units or the mutual dependency relationship.

**It** should be noted that the modification of "a" and "a plurality" mentioned in this disclosure is illustrative and not limiting, and those skilled in the art should understand that "one or more" should be understood unless the context clearly indicates otherwise.

The names of messages or information interaction between multiple devices in embodiments of the present disclosure are for illustrative purposes only and are not intended to limit the scope of such messages or information.

In a live streaming scenario, viewing users send comment information in a live streaming room to interact with the live streamer, and active users may respond verbally based on the comment information sent by the viewing users. As mentioned above, when there is a large number of viewer clients, the real-time comment information sent by the viewer clients is numerous. Even for some hot events, viewer clients may send a large amount of repetitive comment information. Therefore, if the live streamer client replies to each comment information one by one, for example, replying each comment information one by one verbally, it will not only lead to a low reply efficiency but also cause viewing users who enter the live streaming room later to miss the replies of the live streamer. As a result, the viewing users may resend the same comment information to inquire with the live streamer, leading to low efficiency in obtaining reply information for the viewer clients.

To solve the above problem, in the embodiments of the present disclosure, the relevant comment information and the corresponding reply information are displayed on the live streaming interface, that is, the viewing users may obtain the related information directly based on the reply information displayed on the live streaming interface, eliminating the need to send the comment information repeatedly. It enables viewing users to intuitively obtain the related information, and prevents the display redundancy of the comment information that would be caused by a large volume of repetitive comments sent by viewing users.

The method is described below with reference to specific embodiments.

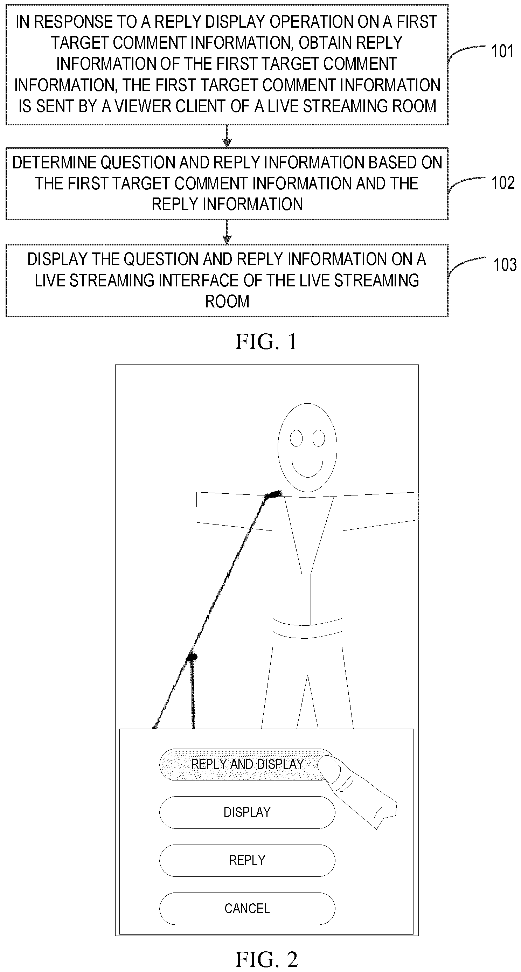

FIG. 1 is a schematic flowchart of a method for displaying information according to the embodiments of the present disclosure. As shown in FIG. 1, the method comprises:

Step 101: In response to a reply display operation on the first target comment information, reply information of the first target comment information is obtained. The first target comment information is sent by a viewer client of a live streaming room.

In the embodiments of the present disclosure, the first target comment information may be any comment information sent by the viewer client of the live streaming room.

In an actual application scenario, if the reply display operation of the live streamer on the first target comment information is obtained, it indicates that the live streamer has a demand for replying and displaying the first target comment information. Therefore, the reply information of the first target comment information is obtained, and the reply information is associated with the first target comment information. Usually, if the first target comment information comprises a questioning content, the reply information is the answer information for the questioning content. For example, if the first target comment information is "Is shipping free?", the corresponding reply information may be "free shipping" or the like.

It should be noted that the aforementioned reply display operation may be any predetermined operation type that can be identified to reply to and display the first target comment information, including a gesture operation, a voice operation, a trigger control, and the like. If the reply display operation is the operation type of the trigger control, as shown in FIG. 2, a plurality of processing controls corresponding to the first target comment information are displayed, where the plurality of processing controls comprise "reply and display", "display" "reply", "cancel", and the like. If it is detected that the "reply and display" control is triggered, then the reply display operation on the first target comment information is obtained. After the "reply and display" control is triggered, it means that the first target comment information needs to be answered. Therefore, the reply information corresponding to the first target comment information is further obtained.

In addition, in different application scenarios, the manner of obtaining the reply information of the first target comment information is different, and example descriptions are as follows:

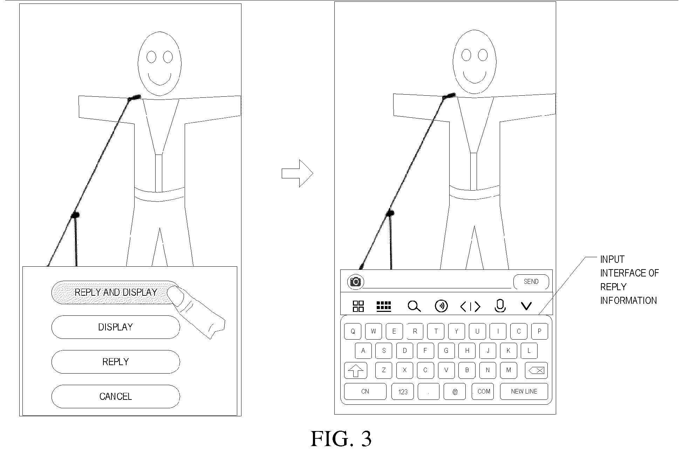

In the embodiments of the present disclosure, as shown in FIG. 3, in response to the reply display operation on the first target comment information, an input interface of the reply information is displayed, and an input content in the input interface may be obtained as the reply information. The live streamer may input the reply information into the input interface to interact with viewing users, explain relevant service content in the live streaming room, and the like, thereby improving the interactive experience between the viewing users and the live streamer.

In the embodiments of the present disclosure, in response to the reply display operation on the first target comment information, a plurality of predetermined template reply information may be displayed, where the plurality of predetermined template reply information may be a predetermined commonly used response related to the type of the current live streaming room. For example, if the type of current the live streaming room is a type of shopping live streaming room, the corresponding plurality of predetermined template reply information may comprise "free shipping", "7-day return available", "ship within 24 hours after placing the order" and the like.

In the embodiments of the present disclosure, the predetermined template reply information triggered in the plurality of predetermined template reply information is obtained as the reply information of the first target comment information. In this way, the reply information may be quickly input by triggering the predetermined template reply information, improving the efficiency of obtaining the reply information.

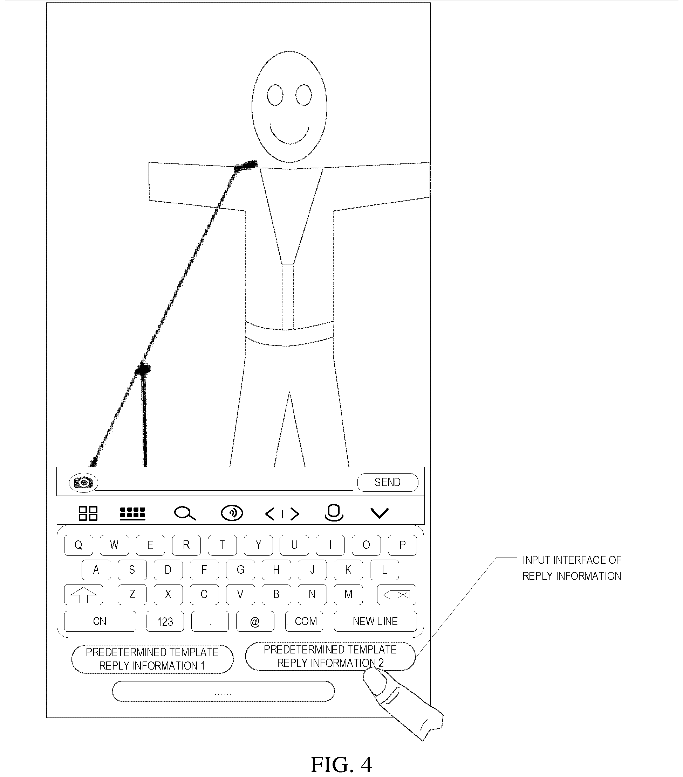

The display methods of the plurality of predetermined template reply information vary across different application scenarios. For example, as shown in FIG. 4, the plurality of predetermined template reply information may be displayed on the input interface, and the live streamer may select the predetermined template reply information as the reply information of the first target comment information by triggering a selection.

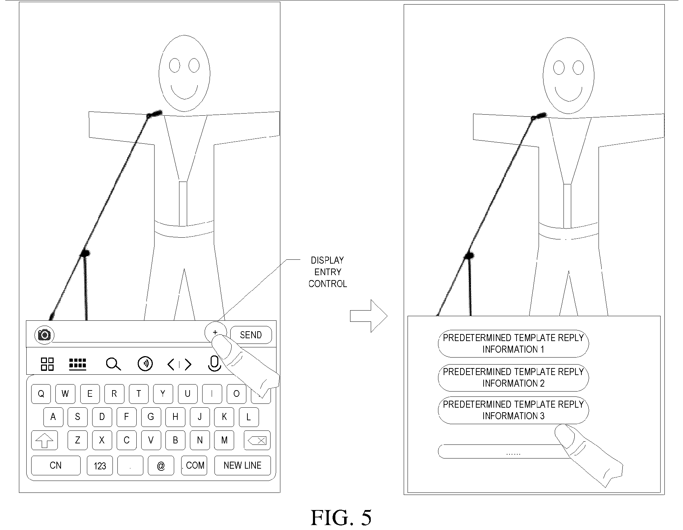

For another example, as shown in FIG. 5, a display entry control of the predetermined template reply information may be displayed on the input interface. If it is detected that the display entry control is triggered, the plurality of predetermined template reply information may be displayed in a pop-up window or the like, and the live streamer may select the predetermined template reply information as the reply information of the first target comment information by triggering a selection.

The display form and the display location of the predetermined template reply information shown in the foregoing figures are merely examples, and in actual applications, whether the display manner of the plurality of predetermined template reply information or the display style may be flexibly set based on the scene needs, which is not shown here.

Step 102: question and reply information is determined based on the first target comment information and the reply information.

In the embodiments of the present disclosure, the generated question and reply information is associated with the first target comment information and the reply information. Therefore, the first target comment information and the reply information can be obtained through the question and reply information, so that the viewing users who have inquiries related to the first target comment information can intuitively and quickly learn the reply information based on the question and reply information, without needing to re-enter the first target comment information in the comment area.

In the embodiments of the present disclosure, in order to enable the viewing users to obtain the first target comment information and the corresponding reply information based on the question and reply information, avoid repeatedly sending the comment information related to the first target comment information, and avoid the live streamer from repeatedly answering similar comment information, the question and reply information should comprise the first target comment information and the reply information. The font and the layout of the first target comment information and the reply information may be flexibly set based on the scenario, which is not limited herein.

In order to further improve the enthusiasm of viewing users in posting comments, additional information may be further added to the question and reply information to encourage more viewing users to participate in comment interaction of the live streaming room.

In the embodiments of the present disclosure, in addition to the first target comment information and the reply information, the question and reply information further comprises a viewer client identifier. The viewer client identifier may be a viewing user nickname, viewing user avatar information corresponding to the viewer client, and the like.

In the embodiments of the present disclosure, at least one associated comment information associated with the first target comment information is obtained. A semantic similarity between each associated comment information and the first target comment information is greater than a predetermined semantic similarity threshold. At least one candidate viewer client identifier corresponding to the at least one associated comment information is determined. Each candidate viewer client identifier corresponds to a sender client of the corresponding associated comment information. A target viewer client identifier to be displayed is determined in the at least one candidate viewer client identifier.

For example, in the at least one candidate viewer client identifier, a predetermined number of candidate viewer client identifiers are randomly selected based on a random algorithm as the target viewer client identifier. For another example, a sending time of each associated comment information may be obtained, a predetermined number of latest sent associated comment information is selected based on the sending time, and a candidate viewer client identifier corresponding to the predetermined number of latest sent associated comment information is determined as the target viewer client identifier to be displayed.

Further, the question and reply information is generated based on the target viewer client identifier, the first target comment information, and the reply information, where the display arrangement manner and the display style of the target viewer client identifier, the first target comment information, and the reply information may be flexibly set based on the scenario, which is not limited herein.

Step 103: the question and reply information is displayed on a live streaming interface of the live streaming room.

After the question and reply information is determined, the question and reply information is displayed on the live streaming interface of the live streaming room. On the one hand, when viewing users of the live streaming room have a commenting demand similar to the first target comment information, the corresponding reply information may be directly obtained through the displayed question and reply information, and the same comment information does not need to be repeatedly sent in the comment area. On the other hand, the live streamer does not need to repeatedly answer the same comment information. Displaying the question and reply information on the live streaming interface of the live streaming room achieves the effect of "pinning to the top of the wall" for the question and reply information, improving the reply efficiency.

It should be noted that, in different application scenarios, the manner of displaying the question and reply information on the live streaming interface of the live streaming room is different. The following example illustrates this by taking the question and reply information that includes the first target comment information, the reply information, and the viewer client identifier, with the viewer client identifier being the avatar of the viewing user, as an example. The explanation is as follows:

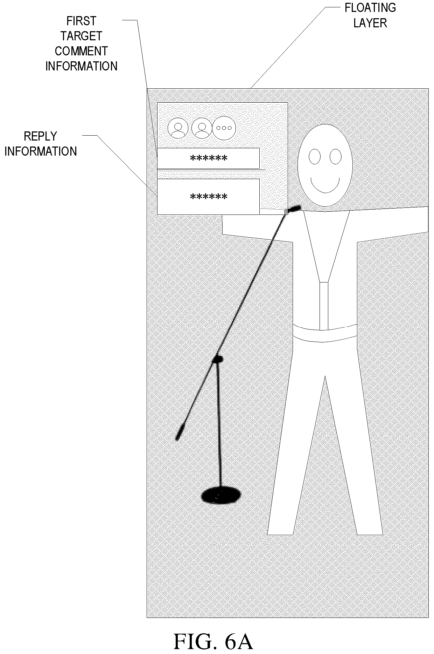

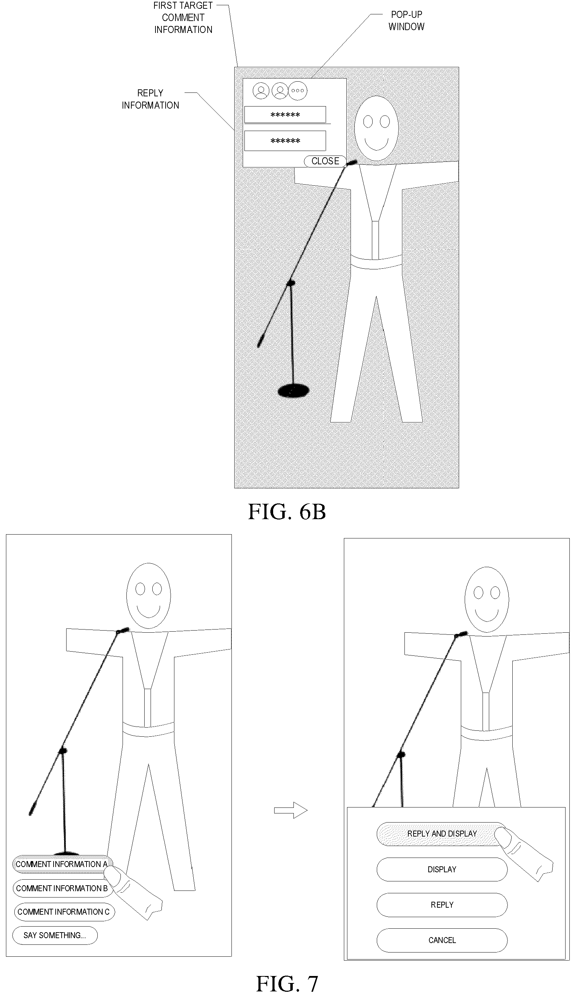

In the embodiments of the present disclosure, as shown in FIG. 6A, the corresponding question and reply information is displayed in the form of a floating layer container on the upper left corner area of the live streaming interface of the live streaming room. The viewing user may intuitively obtain the first target comment information and the corresponding reply information based on the visualization of the question and reply information, thereby improving the reply efficiency of the live streamer. In the embodiments of the present disclosure, as shown in FIG. 6B, the corresponding question and reply information may be displayed on the upper left corner area of the live streaming interface of the live streaming room in the form of a pop-up window. The viewing user may intuitively obtain the first target comment information and the corresponding reply information based on the visualization of the question and reply information, thereby improving the reply efficiency of the live streamer. The live streamer has the authority to close the pop-up window, and therefore, in practical applications, a control for closing the pop-up window may be displayed only on the live streamer client (shown in the figure is the live streaming interface of the live streamer client, including the control for closing the pop-up window).

It should be emphasized that, when the question and reply information is displayed, the display style and the display location of the display carrier such as the display floating layer, the display pop-up window, and the like are merely an example, and the display style comprises, but is not limited to, a display color, a display shape, and the like. The display style needs to be flexibly set based on the scene, which is not limited herein.

In summary, in the method for displaying information according to the embodiments of the present disclosure, in response to the reply display operation on the first target comment information, reply information of the first target comment information is obtained. The question and reply information is determined based on the first target comment information and the reply information. The question and reply information is displayed on the live streaming interface of the live streaming room. As a result, displaying the relevant comment information and the corresponding reply information on the live streaming interface not only improves the reply efficiency, allowing the viewing users to intuitively obtain the relevant information, but also avoids the display redundancy of the comment information caused by a large amount of repeated comment information sent by the viewing users.

As mentioned above, the question and reply information is related to the first target comment information, and therefore, the selection of the first target comment information is of great significance.

For example, if the first target comment information aligns well with the needs of the comments of the viewing users, that is, the first target comment information addresses the hot topics of concern to the viewing users (for example, free shipping of live streaming items in a shopping live streaming room), then the question and reply information associated with the first target comment information may resolve the doubts of more viewing users in the live streaming room.

Therefore, in the embodiments of the present disclosure, before in response to the predetermined reply display operation on the first target comment information, it is further necessary to determine the triggered first target comment information, where the trigger first target comment information may be triggered by the live streamer, or may be triggered by an administrator user of the live streaming room.

It should be noted that, in different application scenarios, the manner of determining the triggered first target comment information is different, and the example is as follows:

In the embodiments of the present disclosure, the first target comment information may be actively selected in a comment area. That is, in the embodiments of the present disclosure, the first trigger comment information triggered in the comment area of the live streaming interface is obtained, and the first trigger comment information is determined as the first target comment information.

In the embodiments of the present disclosure, the live streamer may actively perform the reply display operation on some comment information, in this scenario, even if the first target comment information is only posted by an individual viewing user, if the live streamer considers that the comment information has the need to answer and display (for example, the live streamer considers that the first target comment information may be a hot topic of concern for the viewing users), the corresponding question and reply information may also be displayed on the live streaming interface of the live streaming room.

For example, as shown in FIG. 7, if the live streamer triggers first trigger comment information A in the current comment area of the live streaming interface, it is determined that A is the first target comment information, so that a processing interface for A may be popped up. The processing interface comprises a plurality of processing controls, and the plurality of processing controls may comprise "reply and display", "display" "reply", "cancel", and the like. If it is detected that the "reply and display" control is triggered, a reply display operation on A is obtained, thereby obtaining the reply information of A.

In one embodiment of the present disclosure, the recommended comment information with higher popularity value is actively mined from the comment information, and the recommended comment information is sent to determine the first target comment information in the recommended comment information, thereby ensuring that hot events that attract the attention of a large number of viewing users are answered, avoiding the viewing users from repeatedly sending the comment information, and avoiding the display redundancy of the comment information. Further, providing unified replies to the recommended comment information with a higher popularity avoids the need for the live streamer to reply to the same comment information one by one, thereby improving the reply efficiency.

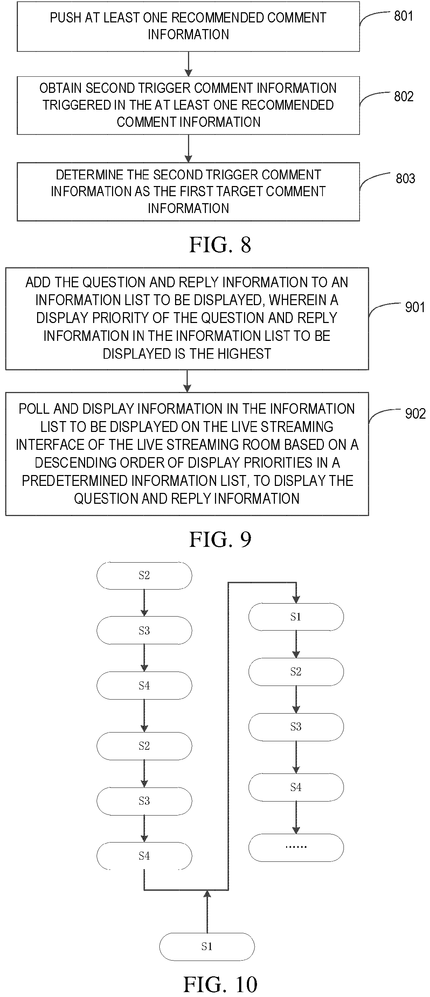

In the embodiments of the present disclosure, as shown in FIG. 8, determining the triggered first target comment information comprises:

In step 801, at least one recommended comment information is pushed.

In the embodiments of the present disclosure, a recommendation page comprising at least one recommended comment information may be displayed, so that the live streamer may subsequently trigger the recommended comment information in the recommendation page.

In different application scenarios, the manner of determining the recommended comment information is different, and an example is as follows:

In some possible embodiments, the at least one recommended comment information is mined based on the popularity of the current comment information, thereby ensuring that the first target comment information is derived from hot comments that the viewing users are concerned about, avoiding similar comment information from the viewing users, and avoiding the need for the live streamer to reply similar comment information one by one, improving the reply efficiency, and avoiding the display redundancy of the comment information.

In the embodiments of the present disclosure, a plurality of candidate comment information sent by the viewer client in a current period is collected. The purpose of obtaining the plurality of candidate comment information in the current period is to ensure the relevance between the obtained recommended comment information and the current live streaming content, to avoid the interference of the comment information unrelated to the current live streaming content in the historical period. The current period may be a corresponding collection duration which may be calibrated based on the specific scenario, for example, 10 minutes.

After obtaining the plurality of candidate comment information, the plurality of candidate comment information is clustered to obtain at least one set of candidate comment information. The cluster analysis may be performed based on a semantic similarity. For example, semantic information of each of the candidate comment information is recognized, a semantic similarity between each of the candidate comment information is computed based on the semantic information, and the candidate comment information whose semantic similarity is within a certain range is clustered into one set of candidate comment information.

Further, a popularity value of each set of candidate comment information is determined. In some possible embodiments, a quantity of candidate comment information comprised in each set of candidate comment information is determined, normalization is performed on the quantity, and a processing result is determined as a popularity value. In other possible embodiments, a predetermined keyword comprised in each set of candidate comment information and an occurrence frequency of the predetermined keyword may be recognized. A popularity value is determined based on a product value of a weight and the occurrence frequency of the predetermined keyword. If the set of candidate comment information comprises a plurality of predetermined keywords, a sum of the product values of the weights and the occurrence frequency of the plurality of predetermined keywords is determined as the popularity value.

After the popularity value of each set of candidate comment information is determined, based on the popularity value of each set of candidate comment information, whether there is at least one set of target comment information meeting a predetermined recommendation condition is determined.

**In** different application scenarios, the predetermined recommendation condition is different. In some possible embodiments, it is determined whether the popularity value of each set of candidate comment information is greater than a predetermined popularity threshold. If the popularity value is greater than the predetermined popularity threshold, it is determined that the corresponding set of candidate comment information meets the predetermined recommendation condition. Thereby, the corresponding set of candidate comment information is determined as the set of target comment information.

**In** some other possible embodiments, the sets of candidate comment information are sorted in descending order of popularity values, and the sets of candidate comment information whose sorting results are within the top predetermined number are determined as the set of target comment information meeting the predetermined recommendation condition.

In response to the determination that there is at least one set of target comment information, the at least one recommended comment information corresponding to the at least one set of target comment information is determined. For example, one comment information is randomly selected from the set of target comment information as the recommended comment information. For another example, the comment information selected by the live streamer from the set of target comment information may be determined as the recommended comment information.

Step 802: second trigger comment information triggered in the at least one recommended comment information is obtained.

Step 803: the second trigger comment information is determined as the first target comment information.

In the embodiments of the present disclosure, the second trigger comment information triggered in the at least one recommended comment information is obtained, and the second trigger comment information is determined as the first target comment information.

In summary, in the method for displaying information according to the embodiments of the present disclosure, the first target comment information may be from the comment area or may be from the recommended comment information screened based on information such as popularity, to ensure that the first target comment information belongs to the hotspots that the viewing users are interested in. This further avoids the viewing users from posting repetitive comment information and the need for the live streamer to reply to repetitive comment information one by one, thereby improving the reply efficiency and avoiding the display redundancy of the comment information.

Based on the foregoing embodiment, when the question and reply information is displayed on the live streaming interface of the live streaming room, if there is a plurality of question and reply information to be displayed, they may be displayed in a polling form or the like, to ensure that the viewing users can intuitively obtain the plurality of question and reply information, thereby further avoiding the viewing users from posting repetitive comment information.

In an embodiment of the present disclosure, as shown in FIG. 9, displaying the question and reply information on the live streaming interface of the live streaming room comprises:

Step 901: the question and reply information is added to an information list to be displayed. The display priority of the question and reply information in the information list to be displayed is the highest.

In the present embodiment, the currently obtained question and reply information is added to the information list to be displayed, and the display priority of the question and reply information in the information list to be displayed is the highest. That is, for every question and reply information obtained, it can be displayed first. The higher the display priority of the information to be displayed in the information list to be displayed is, the closer the time of its acquisition is to the current time. In this way, it is ensured that the viewing users can see the question and reply information most relevant to the current live streaming scene first.

In step 902, information in the information list to be displayed is polled and displayed on the live streaming interface of the live streaming room based on a descending order of display priorities in a predetermined information list, to display the question and reply information.

After the question and reply information is added to the information list to be displayed, the information in the information list to be displayed is polled and displayed on the live streaming interface of the live streaming room based on a descending order of the display priorities in the predetermined information list, to display the question and reply information. In this way, the information in the predetermined information list is sorted based on the descending order of the display priorities, and polling and displaying based on the sorting result can ensure that the latest added question and reply information is placed first for display.

For example, as shown in FIG. 10, if the currently obtained question and reply information is S1, the information list to be displayed contains 3 information to be displayed, and the order of the display priorities from high to low is S2-S3-S4 respectively, then before the obtained question and reply information is S1, the polling and displaying is performed in an order of S2-S3-S4- S2-S3- S4···, and after the obtained question and reply information is S1, the result of sorting based on the order of the display priorities from high to low is S1-S2-S3-S4, therefore polling and displaying in an order of S1- S2-S3-S4-S1-S2-S3-S4···.

In the embodiments of the present disclosure, when each information in the information list to be displayed is displayed, to ensure that the viewing users can obtain the specific content of the information, the information is continuously displayed for a predetermined duration each time. The predetermined duration may be calibrated based on the scenario, for example, 10s, or the like. That is, the information in the information list to be displayed is polled and displayed based on the predetermined duration. If the display duration of the currently displayed information reaches the predetermined duration, the next information is switched for display.

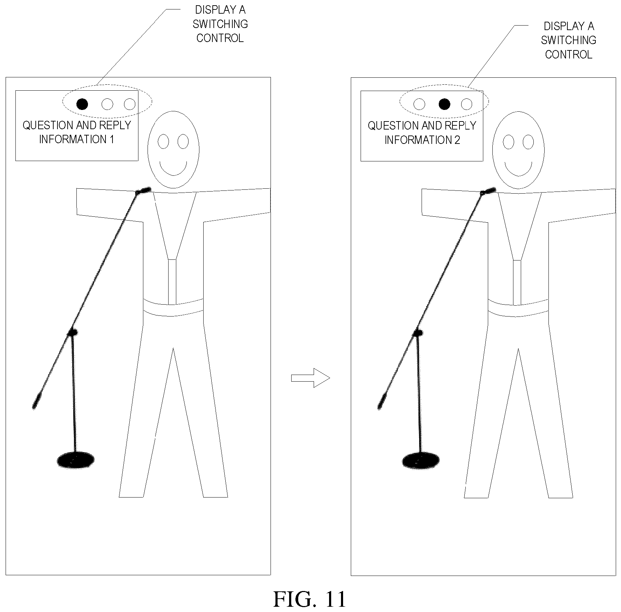

As shown in FIG. 11, if the information is displayed in a floating layer manner, and if the information list to be displayed comprises a plurality of information to be displayed, then when the information in the information list to be displayed is displayed, a switching control is displayed in the floating layer, and the switching control is used to indicate the switching event between the information to better improve the visual experience. In some possible embodiments, to better meet personalized needs, the displayed information may be manually switched based on swipe operations by the live streamer and/or the viewing user, without the need to wait for the predetermined duration to be reached before automatically switching.

In actual display scenarios, to flexibly meet the processing needs for the displayed question and reply information during display, in response to a trigger request for displayed current question and reply information, an edit box comprising the reply information in the current question and reply information is displayed. The target reply information is determined based on an editing operation on the edit box. The reply information in the current question and reply information is updated based on the target reply information.

That is, in the embodiments of the present disclosure, secondary editing of the reply information in the question and reply information by the live streamer is also supported, thereby allowing for more flexibility in adapting to changes in the live streaming scenario.

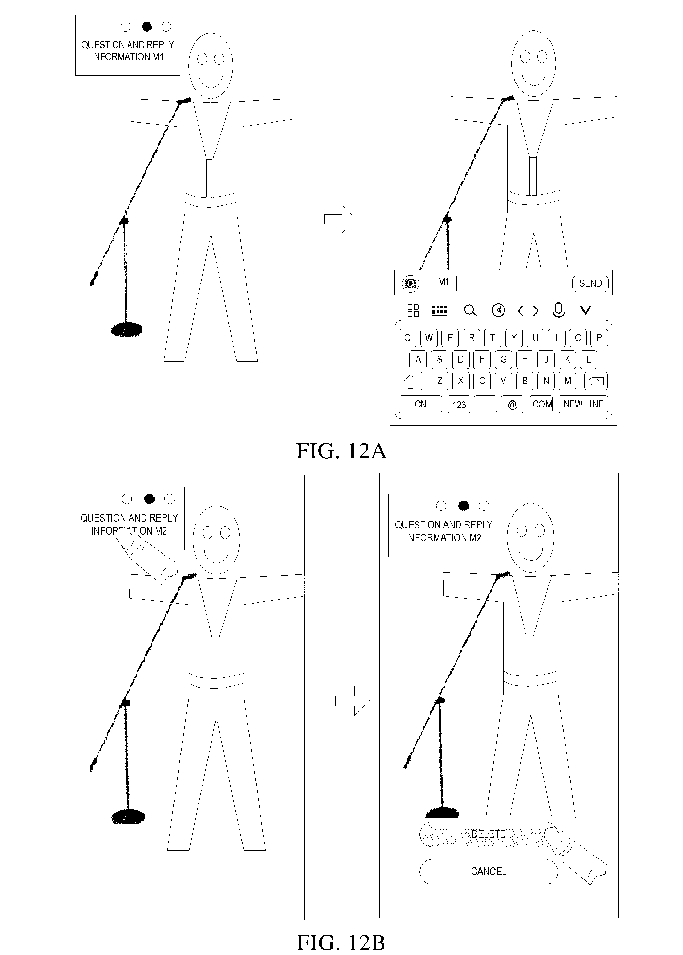

In the embodiments of the present disclosure, as shown in FIG. 12A, if an editing request for the current question and reply information M1 is obtained, for example, a double-click trigger or a long-press trigger, then an edit box containing the reply information M1 in the current question and reply information is displayed, and the live streamer may edit the original reply information in the edit box. Thus, target reply information M2 after the editing operation is obtained, and the M1 is updated based on the M2, to realize a secondary editing of the reply information.

In other words, if the live streaming scene changes, some information displayed in the information list to be displayed is already inconsistent with the live streaming scene, for example, some information in the information list to be displayed may also be deleted.

In the embodiments of the present disclosure, in response to a deleting request for the displayed current information, the current information is deleted from the information list to be displayed.

In the embodiments of the present disclosure, as shown in FIG. 12B, if the trigger request for the current question and reply information M2 is obtained, a processing interface corresponding to M2 is popped up. The interface comprises a control such as "delete", "cancel" and so on. If it is detected that the live streamer triggers the "delete" control, then a deleting request for M2 is obtained, and M2 is deleted from the information list to be displayed.

Certainly, considering that in actual application scenarios, if there are a large amount of information in the information list to be displayed, it may lead to some historical information that is irrelevant to the current live streaming scenario, affecting the viewing users. Even if some information that is more relevant to the current live streaming scenario is viewed, the real-time performance of the information in the information list to be displayed may be controlled.

In the embodiments of the present disclosure, a display life cycle of each information is displayed based on a total display duration, avoiding that some historical information farther from the current live streaming time is always displayed. For example, when the information in the information list to be displayed is polled and displayed based on the predetermined duration, the total display duration of each information in the information list to be displayed is counted. The total display duration may be calibrated based on the scenario, for example, 1 minute, or the like. If the total display duration of the information is greater than or equal to the predetermined duration threshold, the information whose total display duration is greater than or equal to the predetermined duration threshold is deleted from the information list to be displayed.

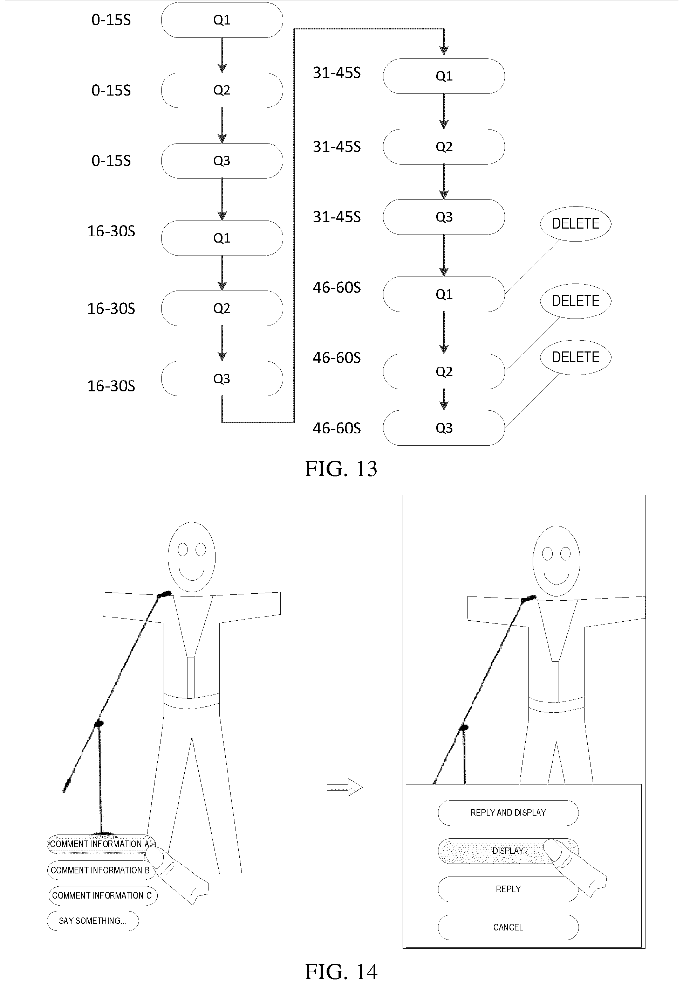

For example, as shown in FIG. 13, if the information list to be displayed comprises 3 information to be displayed, the information to be displayed is ordered in a descending order of the display priorities as Q1-Q2-Q3, and the predetermined duration for displaying each display is 15s, the predetermined total display duration is 60s, then each time information is displayed, the timer counts for 15s. When the accumulated duration reaches 60s, the corresponding information is deleted. In this way, while ensuring that the relevant information can be obtained by the viewing users, some information that is not strong in real-time performance is deleted.

In the embodiments of the present disclosure, the deletion of the relevant information is performed based on the limitation of the number of the information lists to be displayed, to avoid some historical information that is far from the current live streaming time from always participating in the display of the information list to be displayed. In the embodiments of the present disclosure, before the question and reply information is added to the information list to be displayed, the number of information of the current information in the information list to be displayed is determined. If the number of information is equal to the predetermined number threshold, the information with the lowest display priority in the information list to be displayed is deleted. The predetermined number threshold may be calibrated based on the scenario, for example, 5, or the like. As mentioned above, the information with the lowest display priority is the information that was added first and is further away from the current live streaming scenario. Therefore, deleting the information with the lowest display priority in the information list to be displayed realizes the deletion of some information that is not strong in real-time performance.

In addition, it should be noted that, in the embodiments of the present disclosure, the information list to be displayed in the foregoing embodiment may not only comprise the question and reply information but also comprise second target comment information sent by a viewer client corresponding to the live streaming room. The second target comment information may be comment information that has been performed a display operation, and the operation type of the display operation that has been performed may be a voice operation, a gesture operation, or a trigger control operation. For example, as shown in FIG. 14, if the live streamer triggers the trigger comment information B in the current comment area of the live streaming interface, it is determined that B is the second target comment information. Therefore, a processing interface for B may be popped up, and the processing interface comprises a plurality of processing control. The plurality of processing controls may comprise "reply and display", "display" "reply", "cancel", and the like, and if it is detected that the "display" control is triggered, a display operation on B is obtained.

The display priority of the second target comment information in the information list to be displayed is also determined based on the time it is added to the information list to be displayed, that is, the mixed display of the question and reply information and the second target comment information can be realized within the information list to be displayed.

In this scenario, if the comment information sent by the viewing user is of high quality, for example, a live streaming product is described in detail, then the live streamer may directly trigger the comment information, and perform a display operation, so that the second target comment information is also displayed in a "pinning to the top of the wall " manner, thereby further improving the quality of the live streaming.

To sum up, in the method for displaying information according to the embodiments of the present disclosure, when the information is displayed on the live streaming interface of the live streaming room, if there is a plurality of information to be displayed, the information may be displayed in a polled form or the like. When polling and displaying, in response to the processing request for the displayed information, the displayed information is processed in real time based on the processing demand. This ensures that the viewing users can intuitively obtain the plurality of information, while flexibly meeting the changing need for information display during the live streaming.

In order to achieve the above embodiments, the present disclosure further provides an apparatus for displaying information.

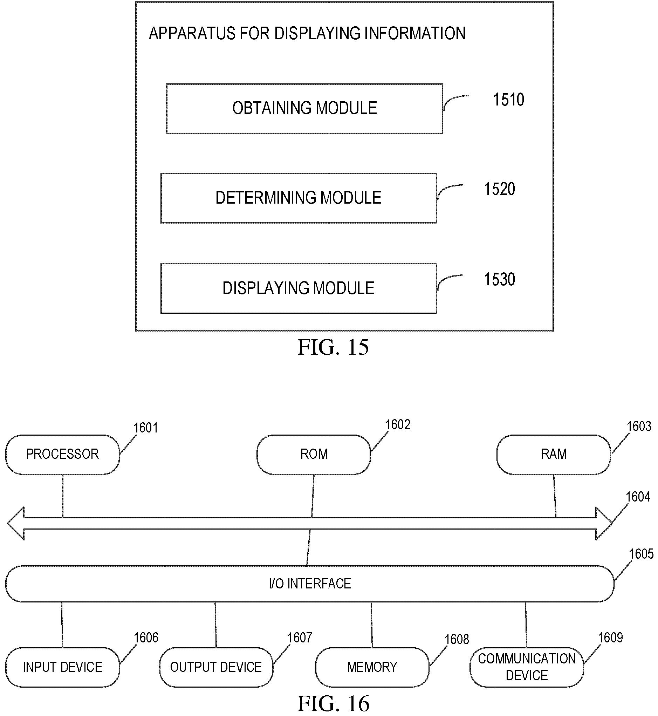

FIG. 15 is a schematic structural diagram of an apparatus for displaying information according to the embodiments of the present disclosure. As shown in FIG. 15, the apparatus comprises an obtaining module 1510, a determining module 1520, and a displaying module 1530.

The obtaining module 1510 is configured to, in response to a reply display operation on first target comment information, obtain reply information of the first target comment information, the first target comment information being sent by a viewer client of a live streaming room.

The determining module 1520 is configured to determine question and reply information based on the first target comment information and the reply information.

The display module 1530 is configured to display the question and reply information on a live streaming interface of the live streaming room.

The apparatus for displaying information provided by the embodiments of the present disclosure may perform the method for displaying information provided by any embodiment of the present disclosure and has functional modules and beneficial effects corresponding to the method, and the implementation principles thereof are similar, and details are not described herein again.

In order to implement the foregoing embodiments, the present disclosure further provides a computer program product, comprising a computer program/an instruction which, when executed by a processor, implements the method for displaying information of the foregoing embodiments.

FIG. 16 is a schematic structural diagram of an electronic device according to the embodiments of the present disclosure.

FIG. 16 is a schematic structural diagram of an electronic device 1600 suitable for implementing the embodiments of the present disclosure. The electronic device 1600 in the embodiments of the present disclosure may include but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 16 is merely an example, and should not impose any limitation on the functions and scope of use of the embodiments of the present disclosure.

As shown in FIG. 16, the electronic device 1600 may include a processor (for example, a central processing unit, a graphics processor, etc. ) 1601, which may perform various appropriate actions and processing according to a program stored in a read-only memory (ROM) 1602 or a program loaded into a random access memory (RAM) 1603 from a memory 1608. In the RAM 1603, various programs and data required by the operation of the electronic device 1600 are also stored. The processor 1601, the ROM 1602, and the RAM 1603 are connected to each other through a bus 1604. Input/output (I / O) interface 1605 is also connected to the bus 1604.

Generally, the following devices may be connected to the I/O interface 1605: an input device 1606 including, for example, a touch screen, a touchpad, a keyboard, a mouse, a camera, a microphone, an accelerometer, a gyroscope, etc.; an output device 1607 including, for example, a liquid crystal display (LCD), a speaker, a vibrator, etc. ; a memory 1608 including, for example, a magnetic tape, a hard disk, etc.; and a communication device 1609. The communication device 1609 may allow the electronic device 1600 to communicate wirelessly or wired with other devices to exchange data. While FIG. 16 shows an electronic device 1600 having various devices, it should be understood that it is not required to implement or have all illustrated devices. More or fewer devices may alternatively be implemented or provided.

In particular, according to the embodiments of the present disclosure, the process described above with reference to the flowchart may be implemented as a computer software program. For example, embodiments of the present disclosure include a computer program product comprising a computer program embodied on a non-transitory computer-readable medium, the computer program comprising program code for performing the method shown in the flowchart. In such embodiments, the computer program may be downloaded and installed from the network through the communication device 1609, or installed from the memory 1608, or from the ROM 1602. When the computer program is executed by the processor 1601, the foregoing functions defined in the information display method of the embodiments of the present disclosure are performed.

It should be noted that the computer-readable medium described above may be a computer-readable signal medium, a computer-readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer-readable signal medium may include a data signal propagated in a baseband or as part of a carrier, where the computer-readable program code is carried. Such propagated data signals may take a variety of forms including, but not limited to, electromagnetic signals, optical signals, or any suitable combination of the foregoing. The computer-readable signal medium may also be any computer-readable medium other than a computer-readable storage medium that may send, propagate, or transmit a program for use by or in connection with an instruction execution system, apparatus, or device. The program code embodied on the computer-readable medium may be transmitted with any suitable medium, including, but not limited to: wires, optical cables, radio frequency (RF), and the like, or any suitable combination of the foregoing.

In some implementations, the client, server may communicate using any currently known or future-developed network protocol, such as HyperText Transfer Protocol (HTTP), and may be interconnected with any form or medium of digital data communication (e.g., a communication network). Examples of communication networks include local area networks ("LANs"), wide area networks ( "WANs"), internets (e.g., the Internet), and peer-to-peer networks (e.g., ad hoc peer-to-peer networks), as well as any currently known or future developed networks.

The computer-readable medium described above may be included in the electronic device, or may be separately present without being assembled into the electronic device.

The computer readable medium carries one or more programs, and when the one or more programs are executed by the electronic device, the electronic device is caused to: in response to a reply display operation on first target comment information, obtain reply information of the first target comment information, the first target comment information being sent by a viewer client of a live streaming room; determine question and reply information based on the first target comment information and the reply information; and display the question and reply information on a live streaming interface of the live streaming room. As a result, displaying the relevant comment information and the corresponding reply information on the live streaming interface not only improves the reply efficiency, allowing the viewing users to intuitively obtain the relevant information, but also avoids the display redundancy of the comment information caused by a large amount of repeated comment information sent by the viewing users.

The electronic device may write computer program code for performing the operations of the present disclosure in one or more programming languages, including, but not limited to, object-oriented programming languages such as Java, Smalltalk, C++, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of the unit does not constitute a limitation on the unit itself in some cases.

The functions described above may be performed, at least in part, by one or more hardware logic components. For example, without limitation, exemplary types of hardware logic components that may be used include field programmable gate arrays (FPGAs), application-specific integrated circuits (ASICs), application specific standard products (ASSPs), systems-on-a-chip (SOCs), complex programmable logic devices (CPLDs), and the like.

The above description is merely an illustration of the preferred embodiments of the present disclosure and the principles of the application. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for displaying information, comprising:
in response to a reply display operation on first target comment information, obtaining reply information of the first target comment information, the first target comment information being sent by a viewer client of a live streaming room;
determining question and reply information based on the first target comment information and the reply information; and
displaying the question and reply information on a live streaming interface of the live streaming room.

2. The method of claim 1, wherein before in response to a predetermined reply display operation on the first target comment information, the method further comprises:
determining triggered first target comment information.

3. The method of claim 2, wherein determining the triggered first target comment information comprises:
obtaining first trigger comment information triggered in a comment area of the live streaming interface;
determining the first trigger comment information as the first target comment information; or
pushing at least one recommended comment information;
obtaining second trigger comment information triggered in the at least one recommended comment information;
determining the second trigger comment information as the first target comment information.

4. The method of claim 3, wherein before pushing the at least one recommended comment information, the method further comprises:
collecting a plurality of candidate comment information sent by the viewer client in a current period;
clustering the plurality of candidate comment information to obtain at least one set of candidate comment information;
determining a popularity value of each set of candidate comment information, and determining, based on the popularity value of each set of candidate comment information, whether there is at least one set of target comment information meeting a predetermined recommendation condition; and
in response to the determination that there is at least one set of target comment information, determining the at least one recommended comment information corresponding to the at least one set of target comment information.

5. The method of claim 1, wherein obtaining the reply information of the first target comment information comprises:
displaying an input interface of the reply information;
obtaining an input content in the input interface as the reply information; or
displaying a plurality of predetermined template reply information;
obtaining predetermined template reply information triggered in the plurality of predetermined template reply information as the reply information.

6. The method of claim 1, wherein the question and reply information comprises the first target comment information, the reply information, and a viewer client identifier, and determining question and reply information based on the first target comment information and the reply information comprises:
obtaining at least one associated comment information associated with the first target comment information, wherein a semantic similarity between each associated comment information and the first target comment information is greater than a predetermined semantic similarity threshold;
determining at least one candidate viewer client identifier corresponding to the at least one associated comment information;
determining a target viewer client identifier to be displayed in the at least one candidate viewer client identifier; and
generating the question and reply information based on the target viewer client identifier, the first target comment information, and the reply information.

7. The method of claim 1, wherein displaying the question and reply information on the live streaming interface of the live streaming room comprises:
adding the question and reply information to an information list to be displayed, wherein a display priority of the question and reply information in the information list to be displayed is the highest; and
polling and displaying information in the information list to be displayed on the live streaming interface of the live streaming room based on a descending order of display priorities in a predetermined information list, to display the question and reply information.

8. The method of claim 7, wherein polling and displaying information in the information list to be displayed on the live streaming interface of the live streaming room comprises:
polling and displaying, on the live streaming interface of the live streaming room, information in the information list to be displayed based on a predetermined duration; and
correspondingly, the method further comprises:
counting a total display duration for each information in the information list to be displayed;
in response to the total display duration being greater than or equal to a predetermined duration threshold, deleting information with the total display duration greater than or equal to the predetermined duration threshold from the information list to be displayed; and/or
before adding the question and reply information to the information list to be displayed, determining information amount of current information in the information list to be displayed; and
in response to the information amount being equal to a predetermined amount threshold, deleting information with the lowest display priority in the information list to be displayed.

9. The method of claim 7 or 8, wherein the information list to be displayed further comprises second target comment information, wherein the second target comment information is comment information sent by the viewer client corresponding to the live streaming room and has been implemented for a display operation,
wherein a display priority of the second target comment information in the information list to be displayed is determined based on a time when the second target comment information is added to the information list to be displayed.

10. The method of claim 7, further comprising:
in response to an editing request for displayed current question and reply information, displaying an edit box comprising reply information in the current question and reply information;
determining target reply information based on an editing operation on the edit box;
updating reply information in the current question and reply information based on the target reply information; or
in response to a deleting request for displayed current information, deleting the current information from the information list to be displayed.

11. An apparatus for displaying information, comprising:
an obtaining module configured to, in response to a reply display operation on first target comment information, obtain reply information of the first target comment information, the first target comment information being sent by a viewer client of a live streaming room;
a determining module configured to determine question and reply information based on the first target comment information and the reply information; and
a displaying module configured to display the question and reply information on a live streaming interface of the live streaming room.

12. An electronic device, comprising:
a processor;
a memory storing executable instructions by the processor;
the processor being configured to read the executable instructions from the memory, and implement the executable instructions to implement the method for displaying information of any of claims 1 to 10.

13. A computer-readable storage medium, storing a computer program, wherein the computer program is configured to implement the method for displaying information of any of claims 1 to 10.

14. A computer program product, comprising a computer program or an instruction which, when executed by a processor, implements the method for displaying information of any of claims 1 to 10.

15. A computer program, comprising instructions which, when executed by a processor, causes the processor to implement the method for displaying information of any of claims 1 to 10.
